(19) Europäisches Patentamt
European Patent Office
Office européen des brevets

(11) **EP 4 116 891 A1**

(12) **EUROPEAN PATENT APPLICATION**
published in accordance with Art. 153(4) EPC

(43) Date of publication:
**11.01.2023 Bulletin 2023/02**

(21) Application number: **20922956.6**

(22) Date of filing: **05.03.2020**

(51) International Patent Classification (IPC):
**G06N 20/00** (2019.01)

(52) Cooperative Patent Classification (CPC):
**G06N 20/00**

(86) International application number:
**PCT/JP2020/009534**

(87) International publication number:
**WO 2021/176674 (10.09.2021 Gazette 2021/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• **SUZUKI, Hirofumi**
  **Kawasaki-shi, Kanagawa 211-8588 (JP)**
• **GOTO, Keisuke**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **MODEL GENERATION PROGRAM AND METHOD, AND INFORMATION PROCESSING DEVICE**

(57) An information processing apparatus obtains a training data set to be used to generate a linear model. The information processing apparatus calculates, on a first assumption that assumes each of individual data items included in the training data set is easy for a user to interpret, each of first values obtained by optimizing an objective function that has ease of interpretation of the data item as a loss weight using the training data set for each first state in which the data item violates the first assumption, and calculates, on a second assumption that assumes the data item is difficult for the user to interpret, each of second values obtained by optimizing the objective function using the training data set for each second state in which the data item violates the second assumption. The information processing apparatus selects a specific data item from the individual data items on the basis of each of the first values and each of the second values for each of the individual data items, and generates the linear model using user evaluation for the specific data item.

FIG. 10

EP 4 116 891 A1

**Description**

FIELD

The present invention relates to a model generation program, a model generation method, and an information processing apparatus.

BACKGROUND

With the spread of artificial intelligence (AI) technology, there is an increasing demand for accountable machine learning models, such as questioning whether determination of a black box model is trustworthy, seeking the basis of the determination that may be interpreted by humans, and the like. In view of the above, a white box model such as a rule list, a decision tree, a linear model, or the like is used in advance, but simply using a white box model does not necessarily result in a model that may be interpreted by humans.

Accordingly, in recent years, an interactive approach that repeats model generation and feedback to humans has been used to generate a model convincing to humans and having high accuracy. For example, a task of "predicting a model output for a certain input" is displayed to a user, and interpretability is evaluated on the basis of a reaction time. Then, according to the evaluation, parameters for optimizing the model are changed to update the model. With such a process repeated, the generation of the model convincing to humans and having high accuracy has been carried out.

CITATION LIST

NON-PATENT DOCUMENT

Non-Patent Document 1: Isaac Lage, et al., "Human-in-the-Loop Interpretability Prior", 32nd Conference on Neural Information Processing Systems (NIPS 2018), pages 10180-10189, 2018

SUMMARY

[TECHNICAL PROBLEM]

However, the technique described above is for models that allow humans to predict the output by following branches, such as the decision tree, the rule list, and the like, and it is difficult to apply the technique to the linear model. For example, in a case where 100 data items appear in the model, it is burdensome and unrealistic for the user to read all the 100 data items and estimate a predicted value of the model.

Furthermore, since the interpretability of the linear model is determined by ease of interpretation of the data items presented as explanation of the output, it is not possible to evaluate the interpretability from the length of the response time to the task described above.

In one aspect, it is aimed to provide a model generation program, a model generation method, and an information processing apparatus capable of improving ease of interpretation of a model.

[SOLUTION TO PROBLEM]

According to a first proposal, a model generation program causes a computer to execute a process of obtaining a training data set to be used to generate a linear model. The model generation program causes the computer to execute a process of calculating, on a first assumption that assumes each of individual data items included in the training data set is easy for a user to interpret, each of first values obtained by optimizing an objective function that has ease of interpretation of the data item as a loss weight using the training data set for each first state in which the data item violates the first assumption, and calculating, on a second assumption that assumes the data item is difficult for the user to interpret, each of second values obtained by optimizing the objective function using the training data set for each second state in which the data item violates the second assumption. The model generation program causes the computer to execute a process of selecting a specific data item from the individual data items on the basis of each of the first values and each of the second values for each of the individual data items, and generating the linear model using user evaluation for the specific data item.

According to an aspect of the embodiments, a model generation program for causing a computer to execute a process includes obtaining a training data set to be used to generate a linear model; calculating, on a first assumption that assumes each of individual data items included in the training data set is easy for a user to interpret, each of first values obtained by optimizing an objective function that has ease of interpretation of the data item as a loss weight using the training data set for each first state in which the data item violates the first assumption, and calculating, on a second assumption that assumes the data item is difficult for the user to interpret, each of second values obtained by optimizing the objective function using the training data set for each second state in which the data item violates the second assumption; selecting a specific data item from the individual data items on a basis of each of the first values and each of the second values for each of the individual data items; and generating the linear model using user evaluation for the specific data item.

[ADVANTAGEOUS EFFECTS OF INVENTION]

According to one embodiment, it becomes possible to improve ease of interpretation of a model.

BRIEF DESCRIPTION OF DRAWINGS

FIG. 1 is a diagram for explaining an information processing apparatus according to a first embodiment;
FIG. 2 is a diagram for explaining a problem in existing techniques;
FIG. 3 is a functional block diagram illustrating a functional configuration of the information processing apparatus according to the first embodiment;
FIG. 4 is a diagram for explaining an exemplary training data set;
FIG. 5 is a diagram for explaining a loss function;
FIG. 6 is a diagram for explaining recommendation of data items;
FIG. 7 is a diagram for explaining recommendation of the data items;
FIG. 8 is a diagram for explaining a first loop of a specific example;
FIG. 9 is a diagram for explaining calculation of a difference between upper and lower bounds;
FIG. 10 is a diagram for explaining an exemplary inquiry screen;
FIG. 11 is a diagram for explaining a second loop of the specific example;
FIG. 12 is a diagram for explaining the second loop of the specific example;
FIG. 13 is a diagram for explaining a third loop of the specific example;
FIG. 14 is a diagram for explaining the third loop of the specific example;
FIG. 15 is a diagram for explaining a fourth loop of the specific example;
FIG. 16 is a diagram for explaining the fourth loop of the specific example;
FIG. 17 is a diagram for explaining a fifth loop of the specific example;
FIG. 18 is a flowchart illustrating a processing flow; and
FIG. 19 is a diagram for explaining an exemplary hardware configuration.

DESCRIPTION OF EMBODIMENTS

Hereinafter, embodiments of a model generation program, a model generation method, and an information processing apparatus according to the present invention will be described in detail with reference to the drawings. Note that the embodiments do not limit the present invention. Furthermore, the individual embodiments may be appropriately combined within a range without inconsistency.

[First Embodiment]

[Description of Information Processing Apparatus]

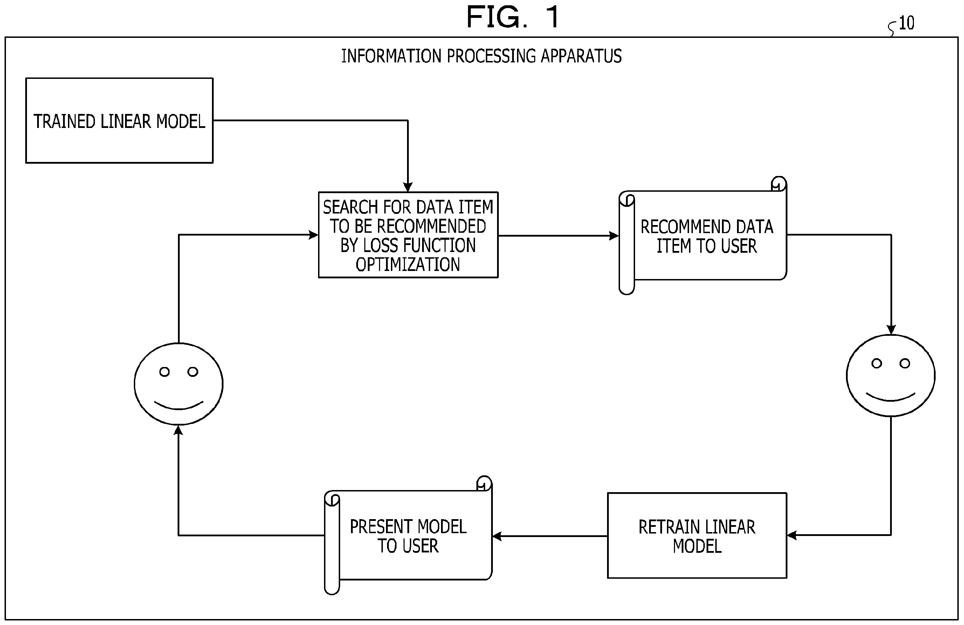

FIG. 1 is a diagram for explaining an information processing apparatus 10 according to a first embodiment. The information processing apparatus 10 illustrated in FIG. 1 is a computer device that generates a highly interpretable classification model. The information processing apparatus 10 repeats evaluation feedback by humans and model generation through user (human) interaction, and generates a model convincing to humans and having high accuracy while minimizing time and effort taken by humans. The information processing apparatus 10 according to the first embodiment will be described using a linear model, which is an exemplary white box model, as an example of an accountable machine learning model.

Here, a classification model (training model) based on a regression equation (see equation (2)) obtained by minimizing a loss function expressed by an equation (1) may be considered as an example of the linear model. Note that the loss function is an exemplary objective function including training data, a classification error, and a weight penalty, and the regression equation indicates an example assuming that there are d data items. The regression equation is a model that makes a classification of a positive example when m(x) > 0 and a negative example otherwise.
[Equation 1]

$$\text{Loss function L}(y, X, a) = \|y - aX\|_2^2 + \rho \sum_i^d a_i$$

| y, X: Training data | Classification error | Weight penalty |

... Equation (1)

[Equation 2]

### [Equation 2]

$$\text{Regression equation m}(x) = a_1 x_1 + a_2 x_2 + \cdots + a_d x_d$$  ... Equation (2)

In general, in the trained classification model, a data item that matches input data and has a weight of not "0" is presented to the user as an explanation. For example, in a case of inputting an input x = (0, 1, 1, 0, 1) when the classification model is m(x) = $7x_1$ - $2x_3$ - $6x_5$, the predicted value m(x) by the classification model is "-8". At this time, since it is classified as a negative example due to $x_3$ and $x_5$, "$x_5$" may be presented to the user as particularly important. In this manner, as the training progresses by the interactive approach, the data items with a weight of "0" increase due to adjustment of the penalty in the loss function so that the explanation is simplified, but the explanation simplicity and the classification accuracy are in a trade-off relationship.

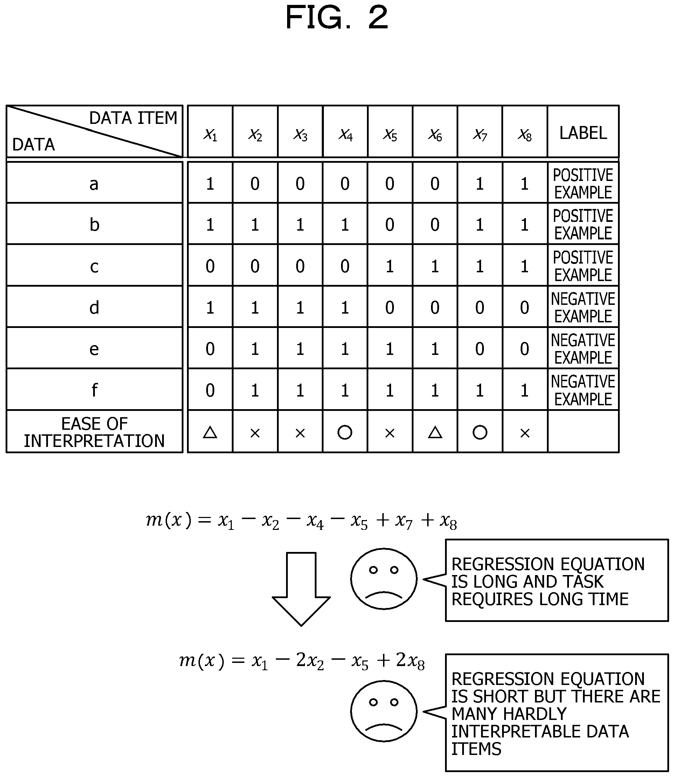

FIG. 2 is a diagram for explaining a problem in existing techniques. As illustrated in FIG. 2, while increasing the number of data items improves the classification accuracy, the regression equation becomes longer so that a time needed for the user to perform a task of "predicting a model output for a certain input" becomes longer. That is, it takes a longer time for the user to determine whether or not each data item is interpretable and for obtaining the evaluation by the user, whereby it takes time to generate the classification model. On the other hand, when the regression equation is shortened, the data items $x_2$, $x_5$, $x_8$ (ease of interpretation = x), and the like difficult for the user to interpret may be used in many cases, whereby the task processing time of the user is not necessarily shortened.

In view of the above, the information processing apparatus 10 according to the first embodiment performs optimization under the formulation assuming the ease of interpretation of each data item, and gives the user a simple task of "evaluating one data item" to obtain the actual ease of interpretation. Then, the information processing apparatus 10 manages the upper bound and the lower bound of the optimum value, thereby effectively determining the data item to be evaluated by the user on the basis of them.

Specifically, the information processing apparatus 10 obtains the classification model trained using a training data set including each data item. Then, the information processing apparatus 10 calculates a first value obtained by optimizing, using the training data set, the loss function having the ease of interpretation of the data item as a loss weight on a first assumption in which each of the data items included in the training data set is assumed to be easy to interpret. Similarly, the information processing apparatus 10 calculates a second value obtained by optimizing the loss function using the training data set on a second assumption in which the data item is assumed to be easy to interpret. Then, the information processing apparatus 10 selects a specific data item from the individual data items on the basis of a change in the first value and the second value for each of the data items, and executes retraining of the classification model using the user evaluation for the specific data item.

For example, as illustrated in FIG. 1, the information processing apparatus 10 searches for a data item to be recommended by optimizing the loss function, and proposes the searched data item to the user. Then, the information processing apparatus 10 obtains the user evaluation for the proposed data item, and executes retraining of the classification model (linear model) in consideration of the user evaluation to present it to the user. Furthermore, the information processing apparatus 10 obtains the user evaluation for the proposed classification model, and re-executes the search for the data item to be proposed to the user.

That is, when recommending the data item to the user on the basis of a training history, the information processing apparatus 10 simplifies the task by reducing the number of data items and repeats the user evaluation and the retraining based on the evaluation, thereby implementing model generation in consideration of the ease of interpretation of the data item. In this manner, the information processing apparatus 10 is enabled to improve the ease of interpretation of the model. Note that "easy to interpret data items" used in the present embodiment is synonymous with "easy to appear in a model".

[Functional Configuration]

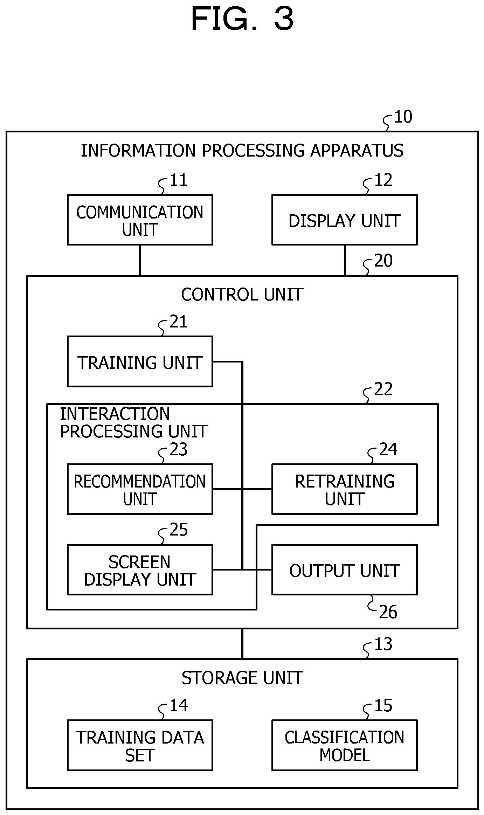

FIG. 3 is a functional block diagram illustrating a functional configuration of the information processing apparatus 10 according to the first embodiment. As illustrated in FIG. 3, the information processing apparatus 10 includes a communication unit 11, a display unit 12, a storage unit 13, and a control unit 20.

The communication unit 11 is a processing unit that controls communication with another device, and is implemented by, for example, a communication interface. For example, the communication unit 11 receives, from an administrator terminal or the like, the training data set and various instructions such as a processing start and the like, and transmits the trained classification model to the administrator terminal.

The display unit 12 is a processing unit that outputs various types of information generated by the control unit 20, and is implemented by, for example, a display, a touch panel, or the like.

The storage unit 13 is an exemplary storage device that stores various data, programs to be executed by the control unit 20, and the like, and is implemented by, for example, a memory or a hard disk. The storage unit 13 stores a training data set 14 and a classification model 15.

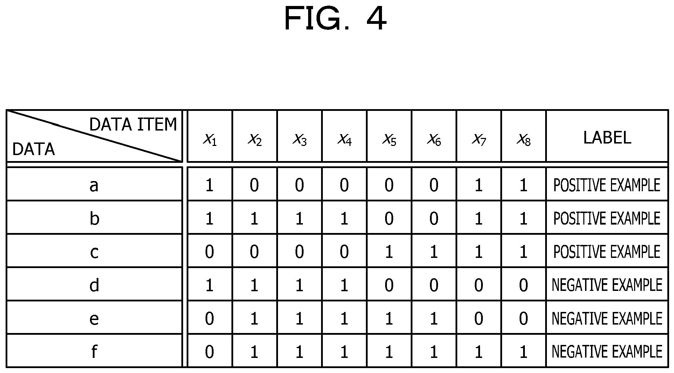

The training data set 14 is training data used for training the classification model 15. FIG. 4 is a diagram for explaining an example of the training data set 14. As illustrated in FIG. 4, the training data set 14 includes multiple training data in which multiple data items, which are explanatory variables, are associated with ground truth (label), which is an objective variable.

Specifically, as illustrated in FIG. 4, each of data a, b, c, d, e, and f includes a data item $x_i$ ($i$ = 1 to 8) and a label. For example, in the data a, "1, 0, 0, 0, 0, 0, 1, and 1" are set for the "data items $x_1$, $x_2$, $x_3$, $x_4$, $x_5$, $x_6$, $x_7$, and xs", and a "positive example" is set as a label.

The classification model 15 is a trained model trained using the training data set 14. For example, the classification model 15 is a linear model m(x) expressed by an equation (3), and is classified as a "positive example" when the predicted value m(x) for the input is larger than zero, and as a "negative example" when the predicted value m(x) is equal to or less than zero. Note that the classification model 15 is trained by a training unit 21 to be described later.
[Equation 3]

$$m(x) = x_1 - 2x_2 - x_5 + 2x_8 \qquad \text{... Equation (3)}$$

The control unit 20 is a processing unit that takes overall control of the information processing apparatus 10, and is implemented by, for example, a processor or the like. The control unit 20 includes a training unit 21, an interaction processing unit 22, and an output unit 26. Note that the training unit 21, the interaction processing unit 22, and the output unit 26 may be implemented as an electronic circuit, such as a processor or the like, or may be implemented as a process to be executed by a processor.

The training unit 21 is a processing unit that executes training of the classification model 15. Specifically, the training unit 21 trains the classification model 15 using the training data set 14, and stores the trained classification model 15 in the storage unit 13 upon completion of the training.

Here, the classification model and the loss function to be used for the training will be described. A loss function L expressed by an equation (4) is defined by the sum of the classification error and the weight penalty. Here, X represents the explanatory variable of the training data, and y represents the objective variable of the training data. Furthermore, p represents a preset constant, and $w_i$ represents a value in which a true value is found by imposing a task on humans. Note that $w_i$ = w- is set when the data item i is easy to interpret while $w_i$ = $w_+$ is set when the data item i is difficult to interpret, and wand $w_+$ are input parameters given in advance. In the first embodiment, it is assumed that $w_-$ = 1.0 and $w_+$ = 1.5. [Equation 4]

$$L(\beta \mid w) = \|y - X\beta\|_2^2 + \rho \sum_i w_i |\beta_i| \qquad \text{... Equation (4)}$$

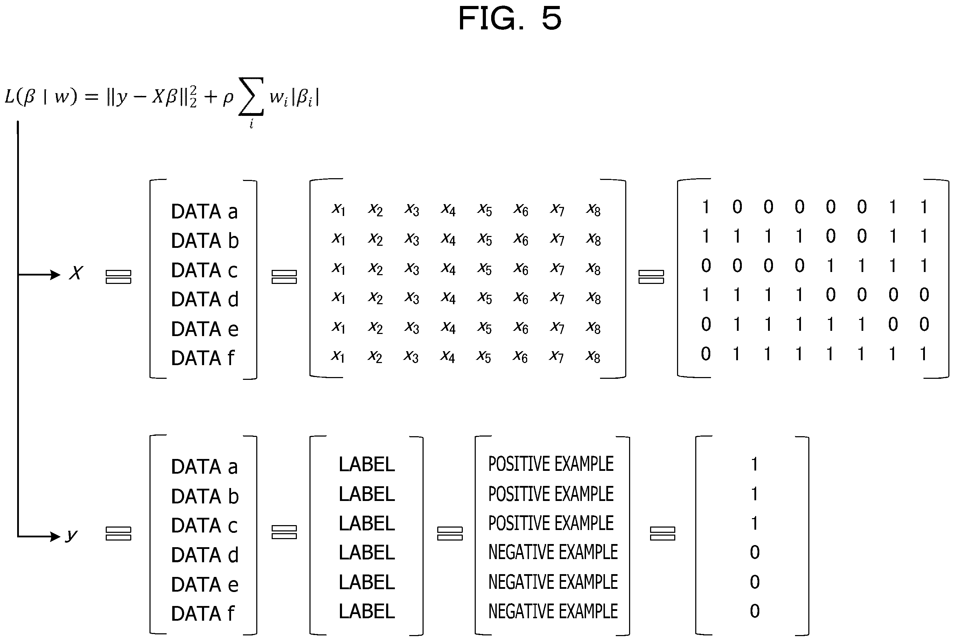

FIG. 5 is a diagram for explaining the loss function. As illustrated in FIG. 5, in the training unit 21, a matrix of eight rows and six columns having the explanatory variables (data items) of the individual data of the training data set 14 as rows is assigned to "X" of the loss function L. For example, "$x_1$, $x_2$, $x_3$, $x_4$, $x_5$, $x_6$, $x_7$, $x_8$ = 1, 0, 0, 0, 0, 0, 1, 1" of the data a is set in the first line of X, "$x_1, x_2, x_3, x_4, x_5, x_6, x_7, x_8$ = 1, 1, 1, 1, 0, 0, 1, 1" of the data b is set in the second line, "$x_1, x_2, x_3, x_4, x_5, x_6, x_7, x_8$ = 0, 0, 0, 0, 1, 1, 1, 1" of the data c is set in the third line, "$x_1, x_2, x_3, x_4, x_5, x_6, x_7, x_8$ = 1, 1, 1, 1, 0, 0, 0, 0" of the data d is set in the fourth line, "$x_1, x_2, x_3, x_4, x_5, x_6, x_7, x_8$ = 0, 1, 1, 1, 1, 1, 0, 0" of the data e is set in the fifth line, and "$x_1, x_2, x_3, x_4, x_5, x_6, x_7, x_8$ = 0, 1, 1, 1, 1, 1, 1, 1" of the data f is set in the sixth line.

Furthermore, a matrix of one row and six columns having the label of each data of the training data set 14 as the row is assigned to "y" of the loss function L. For example, "label = positive example" of the data a is set in the first line of y, "label = positive example" of the data b is set in the second line, "label = positive example" of the data c is set in the third line, "label = negative example" of the data d is set in the fourth line, "label = negative example" of the data e is set in the fifth line, and "label = negative example" of the data f is set in the sixth line. In the calculation, the positive example is converted to "1" and the negative example is converted to "0".

Furthermore, $w_i$ is a value set for each data item, and is defined by the ease of interpretation of each data item. For example, $w_1$ is set for the data item $x_1$, $w_2$ is set for the data item $x_2$, $w_3$ is set for the data item $x_3$, $w_4$ is set for the data item $x_4$, $w_5$ is set for the data item $x_5$, $w_6$ is set for the data item $x_6$, $w_7$ is set for the data item $x_7$, $w_8$ is set for the data item $x_8$, and optimization (minimization) of the loss function is calculated. Note that an optional value is set for $w_i$ at the time of training by the training unit 21. For example, it is possible to set "1" for all pieces of $w_i$ and is also possible to set a random value for each piece of $w_i$.

Then, the training unit 21 executes optimization of the loss function L in which the values are set for the individual variables as described above, and generates the classification model m(x) expressed by an equation (5) using $\beta_i$; obtained by the optimization. In other words, the training unit 21 generates a classification model based on the regression equation obtained by minimizing the loss function L, and stores it in the storage unit 13 as the classification model 15. Note that, while the equation (5) indicates an example in which the number of data items is d, d = 8 in the first embodiment. [Equation 5]

$$m(x) = \beta_1 x_1 + \beta_2 x_2 + \cdots + \beta_d x_d$$    ... Equation (5)

The interaction processing unit 22 is a processing unit that includes a recommendation unit 23, a retraining unit 24, and a screen display unit 25, and executes acquisition of user evaluation for data items by the interactive approach with the user and retraining of the classification model 15 in consideration of the user evaluation.

Specifically, the interaction processing unit 22 sets the first assumption (hereinafter referred to as "lower bound") in which all data items on which no task is imposed are assumed to be "easy to interpret" and the second assumption (hereinafter referred to as "upper bound") in which all data items on which no task is imposed are assumed to be "difficult to interpret", and manages the optimum solution for the equation (3) for each of the upper bound and the lower bound.

Then, the interaction processing unit 22 considers a new lower bound and upper bound for each of cases where the data items are said to be "easy to interpret" and "difficult to interpret", recommends the data item that reduces the difference between the optimum value based on the new lower bound and the optimum value based on the new upper bound as a result thereof, and feeds back the user evaluation. As a result, the interaction processing unit 22 achieves the optimization of the classification model 15 with a small number of tasks by effectively imposing tasks.

The recommendation unit 23 is a processing unit that searches for one data item to be recommended to the user from multiple data items included in each training data of the training data set and recommends the searched data item to the user.

Specifically, the recommendation unit 23 calculates a first optimum value (first value) obtained by optimizing the loss function of the equation (3) using the training data set in the lower bound where each data item is assumed to be easy to interpret, and a second optimum value (second value) obtained by optimizing the loss function of the equation (3) using the training data set in the upper bound where each data item is assumed to be difficult to interpret. Then, the recommendation unit 23 selects a specific data item as a recommendation target on the basis of a change in the first optimum value and the second optimum value when each data item violates the lower bound and the upper bound.

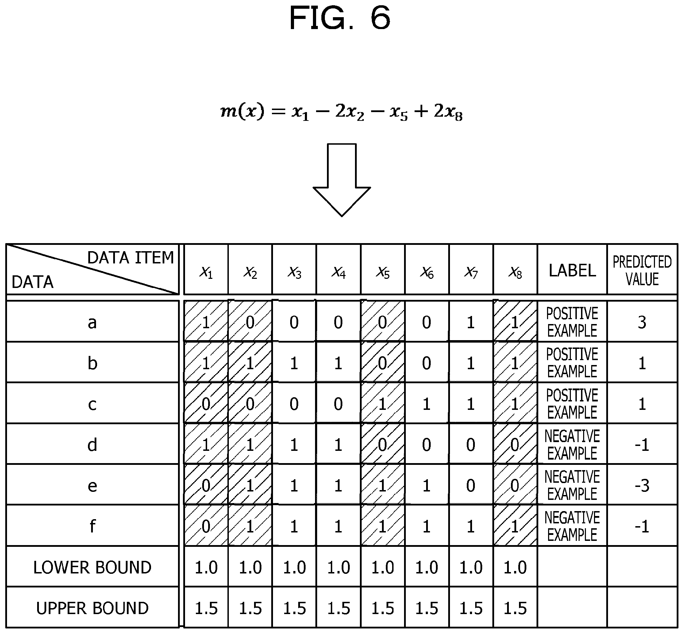

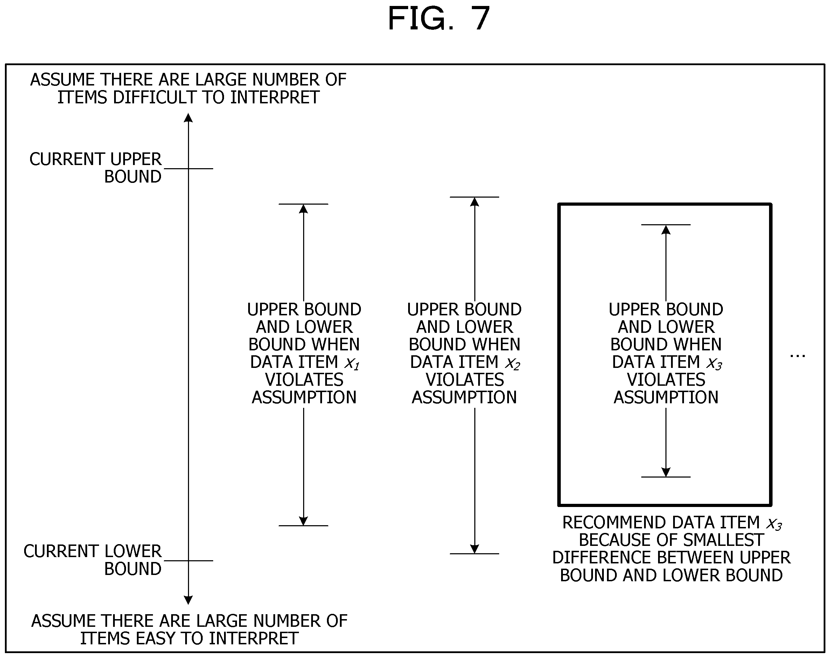

Here, the recommendation of the data item will be described in detail. FIGs. 6 and 7 are diagrams for explaining the recommendation of the data item. As illustrated in FIG. 6, the recommendation unit 23 sets the lower bound ($w_-$ = 1.0) and the upper bound ($w_+$ = 1.5) for each data item ($x_1$ to $x_8$) of the training data set 14 of the trained classification model "$m(x) = x_1 - 2x_2 - x_5 + 2x_8$". Note that the predicted value is a predicted value when each data (e.g., data a) is input to the classification model m(x).

Then, the recommendation unit 23 calculates each optimum value by generating a contradiction (state that violates the assumption) in each data item at the time of calculating the optimum value (minimization) of the loss function for each of the lower bound and the upper bound.

Specifically, for the lower bounds, the recommendation unit 23 calculates each of the optimum solution when a contradiction is generated only in the lower bound of the data item $x_1$, the optimum solution when a contradiction is generated only in the lower bound of the data item $x_2$, the optimum solution when a contradiction is generated only in the lower bound of the data item $x_3$, the optimum solution when a contradiction is generated only in the lower bound of the data item $x_4$, the optimum solution when a contradiction is generated only in the lower bound of the data item $x_5$, the optimum solution when a contradiction is generated only in the lower bound of the data item xe, the optimum solution when a contradiction is generated only in the lower bound of the data item $x_7$, and the optimum solution when a contradiction is generated only in the lower bound of the data item $x_8$.

Similarly, for the upper bounds, the recommendation unit 23 calculates each of the optimum solution when a contradiction is generated only in the upper bound of the data item $x_1$, the optimum solution when a contradiction is generated only in the upper bound of the data item $x_2$, the optimum solution when a contradiction is generated only in the upper bound of the data item $x_3$, the optimum solution when a contradiction is generated only in the upper bound of the data item $x_4$, the optimum solution when a contradiction is generated only in the upper bound of the data item $x_5$, the optimum solution when a contradiction is generated only in the upper bound of the data item $x_6$, the optimum solution when a contradiction is generated only in the upper bound of the data item $x_7$, and the optimum solution when a contradiction is generated only in the upper bound of the data item $x_8$.

In this manner, the recommendation unit 23 calculates 16 optimum solutions (8 sets of upper bound and lower bound optimum solutions). Then, as illustrated in FIG. 7, the recommendation unit 23 recommends, to the user, the data item with the smallest difference between the optimum value of the upper bound and the optimum value of the lower bound. For example, the recommendation unit 23 determines the data item to be recommended to the user is "$x_3$" in a case where the difference between the optimum value of the upper bound and the optimum value of the lower bound is the smallest when the data item $x_3$ violates the assumption.

That is, the recommendation unit 23 searches for a data item having a small influence in a state contrary to the assumption, determines that the data item is likely to appear in the model, and inquires of the user about the interpretability of the data item, thereby causing the user evaluation to be accurately fed back to the machine learning.

The retraining unit 24 is a processing unit that executes retraining of the classification model 15 in consideration of the user evaluation obtained by the recommendation unit 23. Specifically, the retraining unit 24 generates the classification model 15 based on the regression equation obtained by minimizing the loss function L using the training data set 14 and the equation (3) by a method similar to the training unit 21.

At this time, the retraining unit 24 reflects the user evaluation obtained by the recommendation unit 23 in "$w_i$" to execute the minimization. For example, when the data item $x_3$ is evaluated as "easy to interpret", the retraining unit 24 calculates the minimization of the loss function in which "$w_3 = 1.0$" is set and random values are set for "$w_i$" of other data items. Furthermore, when the data item $x_3$ is evaluated as "difficult to interpret", the retraining unit 24 calculates the minimization of the loss function in which "$w_3 = 1.5$" is set and random values are set for "$w_i$" of other data items.

Then, the retraining unit 24 presents, to the user, the classification model 15 based on the regression equation obtained by minimizing the loss function in which the user evaluation is reflected in "$w_i$", and causes the user to evaluate whether or not the classification model 15 itself is easy to interpret.

Here, in a case where the classification model 15 itself is evaluated to be easy to interpret, the classification model 15 at that time is determined as the ultimately obtained classification model. On the other hand, in a case where the classification model 15 itself is evaluated to be difficult to interpret, the search and recommendation of the data item by the recommendation unit 23 and the retraining by the retraining unit 24 are re-executed.

The screen display unit 25 is a processing unit that generates an inquiry screen for receiving user evaluation and displays it to the user. For example, the screen display unit 25 generates an inquiry screen for inquiring whether the data item searched by the recommendation unit 23 is easy to interpret or difficult to interpret, and displays it to the user. Furthermore, the screen display unit 25 generates an inquiry screen for inquiring whether the classification model 15 generated by the retraining unit 24 is easy to interpret or difficult to interpret, and displays it to the user.

Note that the recommendation unit 23 and the retraining unit 24 receive user evaluation on the inquiry screen generated by the screen display unit 25. Furthermore, the screen display unit 25 may display the inquiry screen on the screen of the display unit 12 of the information processing apparatus 10, and may transmit it to a user terminal.

The output unit 26 is a processing unit that outputs the classification model 15 ultimately determined to be easy to interpret. For example, in a case where classification model 15 displayed on the inquiry screen generated by the screen display unit 25 is determined to be "easy to interpret", the output unit 26 stores the displayed classification model 15 in the storage unit 13, outputs it to the user terminal, or outputs it to any output destination.

[Specific Examples]

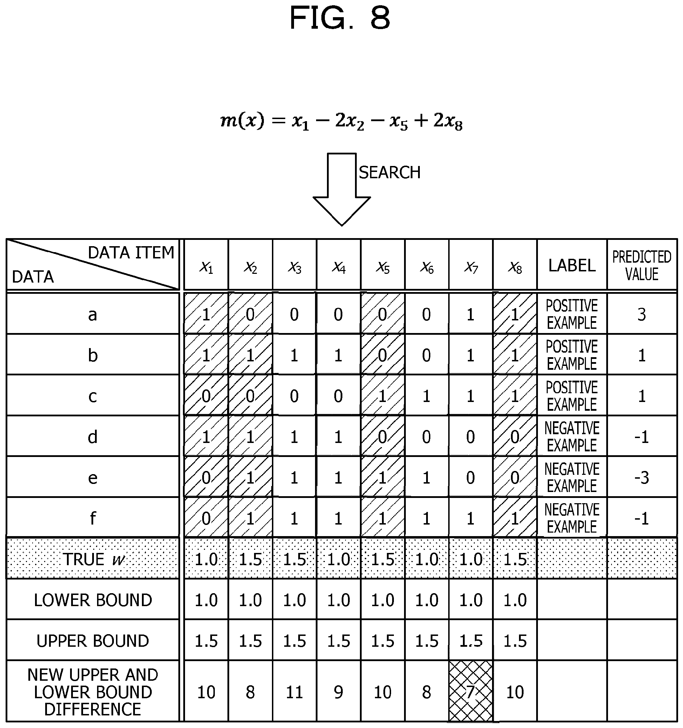

Next, specific examples of the retraining of the classification model 15 in consideration of the user evaluation will be described with reference to FIGs. 8 to 17.

(First Loop)

FIG. 8 is a diagram for explaining a first loop of a specific example. As illustrated in FIG. 8, the interaction processing unit 22 sets the lower bound and the upper bound for each data item of the training data set 14 of the classification model 15 "$m(x) = x_1 - 2x_2 - x_5 + 2x_8$" trained by the training unit 21. Here, in the specific example, it is assumed that "$w_-$" of the lower bound is set to "1.0", and "$w_+$" of the upper bound is set to "1.5". Note that "true w" illustrated in FIG. 8 indicates the potential ease of interpretation of each data item, which is indicated for explanatory convenience in the specific example and is an unknown value in the actual processing.

Then, the interaction processing unit 22 calculates 16 optimum solutions (8 sets of upper bound and lower bound optimum solutions) by generating a state where each data item violates the assumption at the time of calculating the optimum value of the loss function for each of the lower bound and the upper bound, and calculates a difference between the optimum value of the upper bound and the optimum value of the lower bound (difference between new upper and lower bounds).

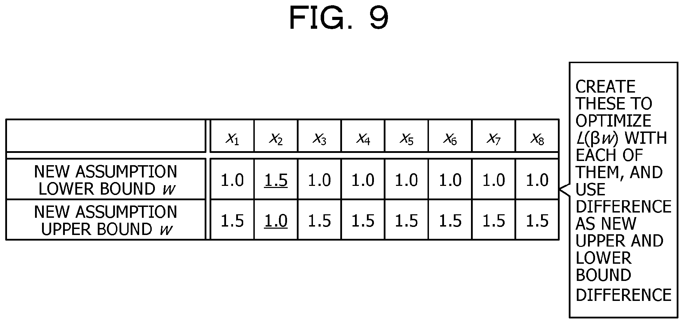

FIG. 9 is a diagram for explaining the calculation of the difference between the upper and lower bounds. As illustrated in FIG. 9, when focusing on the data item $x_2$, the interaction processing unit 22 exchanges the values of the lower bound and the upper bound, thereby generating a state where the data item $x_2$ violates the assumption. Therefore, at the time of calculating the optimum solution for the new assumption lower bound, the interaction processing unit 22 sets "1.5" only for "$w_2$" of "$w_i$" of the weight penalty of the loss function of the equation (3), and inputs "1.0" for other pieces of "w", thereby minimizing the equation (3).

In this manner, the interaction processing unit 22 generates a new upper bound and lower bound when each data item violates the assumption, and calculates an optimum solution for each of them, thereby calculating 16 optimum solutions (8 sets of upper bound and lower bound optimum solutions). Then, assuming that the interaction processing unit 22 has calculated the individual differences between the new upper and lower bound optimum solutions of the data items "$x_1$ to $x_8$" as "10, 8, 11, 9, 10, 8, 7, and 10" as illustrated in FIG. 8, it determines the data item "$x_7$" with the smallest difference as the recommendation target, and recommends it to the user.

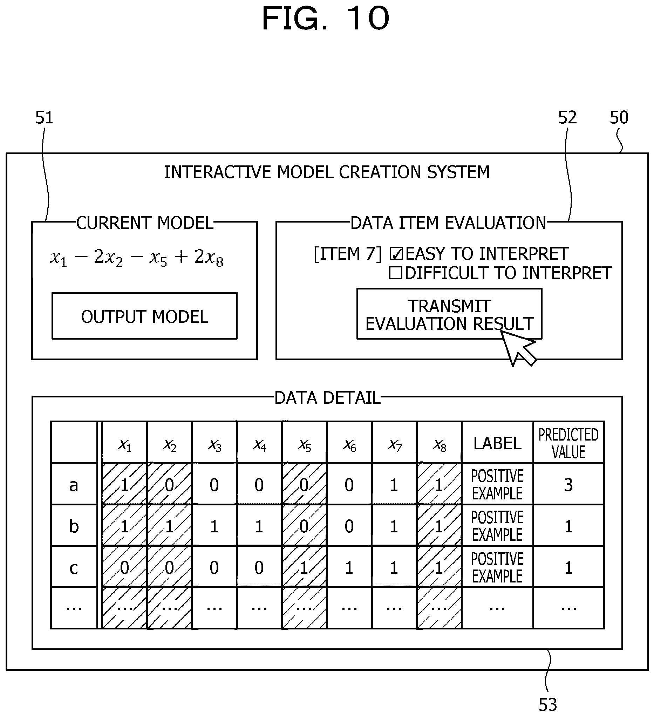

FIG. 10 is a diagram for explaining an exemplary inquiry screen. As illustrated in FIG. 10, the interaction processing unit 22 generates an inquiry screen 50 including an area 51 indicating the current model, an area 52 for receiving evaluation of a data item, and an area 53 for data details, and displays it to the user.

Specifically, the interaction processing unit 22 displays the current classification model 15 (m(x)) in the area 51 indicating the current model, and also displays a button for selecting whether or not to output the model. Furthermore, the interaction processing unit 22 displays the "data item" determined as the recommendation target in the area 52 for receiving the evaluation of the data item, and also displays a button or the like for selecting whether the data item is "easy to interpret" or "difficult to interpret". Furthermore, the interaction processing unit 22 displays the training data set 14 in the area 53 for the data details.

Note that, in this specific example, it is assumed that the interaction processing unit 22 has obtained the evaluation of "easy to interpret" from the user with respect to the recommended data item "$x_7$". Furthermore, it is assumed that the interaction processing unit 22 has obtained the evaluation of "difficult to interpret" from the user with respect to the classification model "$m(x) = x_1 - 2x_2 - x_5 + 2x_8$".

(Second Loop)

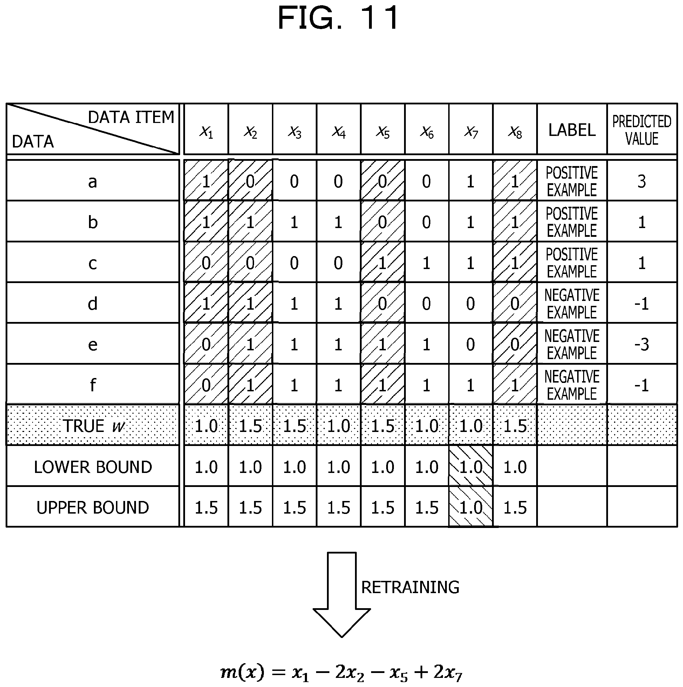

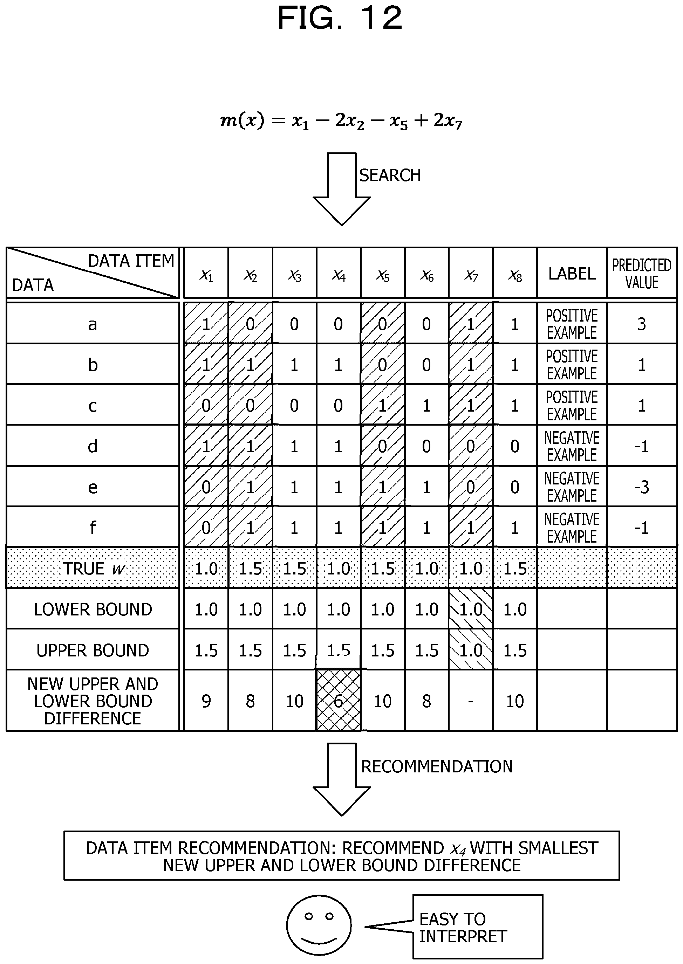

FIGs. 11 and 12 are diagrams for explaining a second loop of the specific example. As illustrated in FIG. 11, the interaction processing unit 22 fixes the lower bound and the upper bound of the data item "$x_7$" evaluated as "easy to interpret" in the first loop to "1.0". Then, at the time of inputting the training data set 14 to the loss function L of the equation (3) and calculating the optimum solution of the loss function using a method similar to that described with reference to FIG. 5, the interaction processing unit 22 sets "$w_7 = 1.0$" corresponding to the data item "$x_7$", and sets a random value "1.0 or 1.5" for other pieces of "w".

That is, the interaction processing unit 22 reflects the user evaluation "easy to interpret" only in the data item "$x_7$", and sets random values for other data items as the evaluation is unknown, and then executes retraining of the classification model. Here, it is assumed that the classification model is generated as "$m(x) = x_1 - 2x_2 - x_5 + 2x_7$" by the retraining.

Subsequently, the interaction processing unit 22 generates the inquiry screen 50 in which the retrained classification model "$m(x) = x_1 - 2x_2 - x_5 + 2x_7$" is displayed in the area 51, and displays it to the user. Here, since the interaction processing unit 22 obtains the user evaluation "difficult to interpret" for the classification model "$m(x) = x_1 - 2x_2 - x_5 + 2x_7$", it searches for the data item to be recommended.

Specifically, as illustrated in FIG. 12, the interaction processing unit 22 generates a new upper bound and lower bound when each of the data items other than the evaluated data item "$x_7$" violates the assumption, and calculates an optimum solution for each of them, thereby calculating 14 optimum solutions (7 sets of upper bound and lower bound optimum solutions). Then, assuming that the interaction processing unit 22 has calculated the individual differences between the new upper and lower bound optimum solutions of the data items "$x_1$ to $x_8$" excluding the data item "$x_7$" as "9, 8, 10, 6, 10, 8, -, and 10" as illustrated in FIG. 12, it determines the data item "$x_4$" with the smallest difference as the recommendation target. Then, the interaction processing unit 22 generates the inquiry screen 50 in which the data item "$x_4$" is displayed in the area 52, and displays it to the user to recommend the data item "$x_4$" to the user.

Note that, in this specific example, it is assumed that the interaction processing unit 22 has obtained the evaluation of "easy to interpret" from the user with respect to the recommended data item "$x_4$".

(Third Loop)

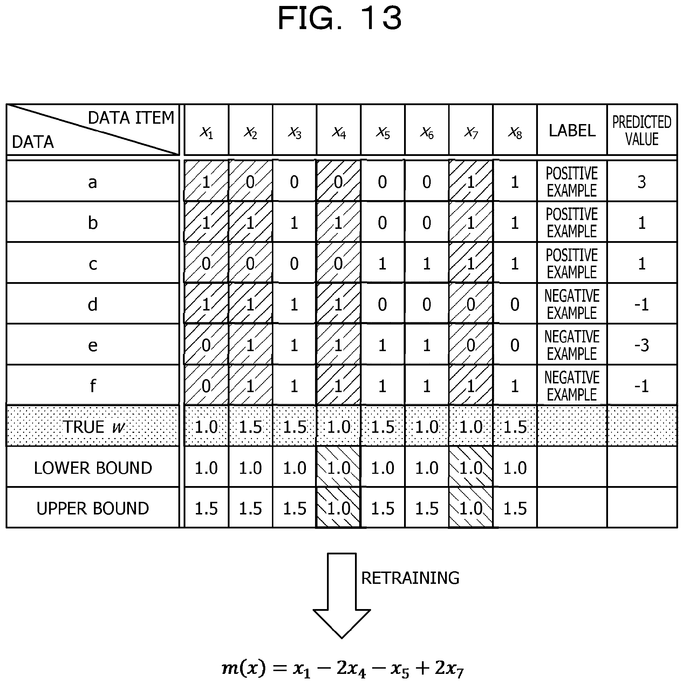

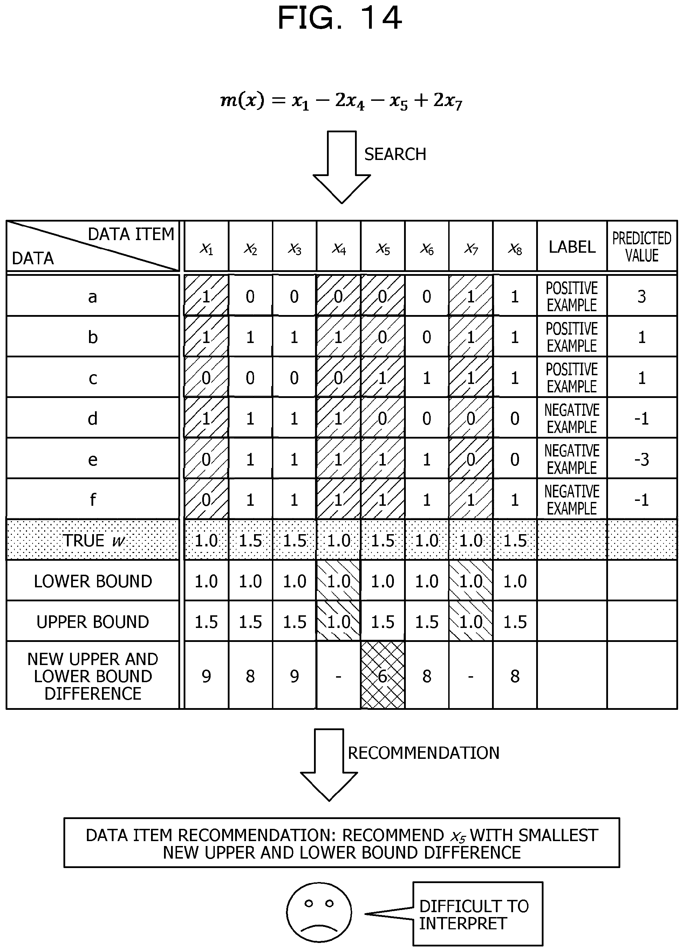

FIGs. 13 and 14 are diagrams for explaining a third loop of the specific example. As illustrated in FIG. 13, the interaction processing unit 22 fixes, to "1.0", the lower bound and the upper bound of the data item "$x_7$" evaluated as "easy to interpret" in the first loop and the data item "$x_4$" evaluated as "easy to interpret" in the second loop. Then, at the time of inputting the training data set 14 to the loss function L of the equation (3) and calculating the optimum solution of the loss function using a method similar to that described with reference to FIG. 5, the interaction processing unit 22 sets "$w_7 = 1.0$" corresponding to the data item "$x_7$" and "$w_4 = 1.0$" corresponding to the data item "$x_4$", and sets random values for other pieces of "w".

That is, the interaction processing unit 22 reflects the user evaluation "easy to interpret" only in the data item "$x_7$" and in the data item "$x_4$", and sets random values for other data items as the evaluation is unknown, and then executes retraining of the classification model. Here, it is assumed that the classification model is generated as "$m(x) = x_1 - 2x_4 - x_5 + 2x_7$" by the retraining.

Subsequently, the interaction processing unit 22 generates the inquiry screen 50 in which the retrained classification model "$m(x) = x_1 - 2x_4 - x_5 + 2x_7$" is displayed in the area 51, and displays it to the user. Here, since the interaction processing unit 22 obtains the user evaluation "difficult to interpret" for the classification model "$m(x) = x_1 - 2x_4 - x_5 + 2x_7$", it searches for the data item to be recommended.

Specifically, as illustrated in FIG. 14, the interaction processing unit 22 generates a new upper bound and lower bound when each of the data items other than the evaluated data items "$x_7$" and "$x_4$" violates the assumption, and calculates an optimum solution for each of them, thereby calculating 12 optimum solutions (6 sets of upper bound and lower bound optimum solutions). Then, assuming that the interaction processing unit 22 has calculated the individual differences between the new upper and lower bound optimum solutions of the data items "$x_1$ to $x_8$" excluding the data items "$x_7$" and "$x_4$" as "9, 8, 9, -, 6, 8, -, and 8" as illustrated in FIG. 14, it determines the data item "$x_5$" with the smallest difference as the recommendation target. Then, the interaction processing unit 22 generates the inquiry screen 50 in which the data item "$x_5$" is displayed in the area 52, and displays it to the user to recommend the data item "$x_5$" to the user.

Note that, in this specific example, it is assumed that the interaction processing unit 22 has obtained the evaluation of "difficult to interpret" from the user with respect to the recommended data item "$x_5$".

(Fourth Loop)

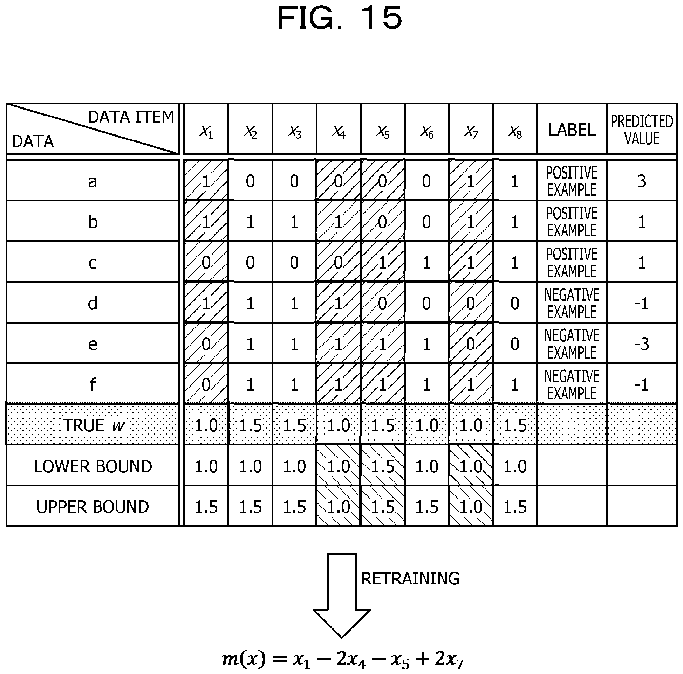

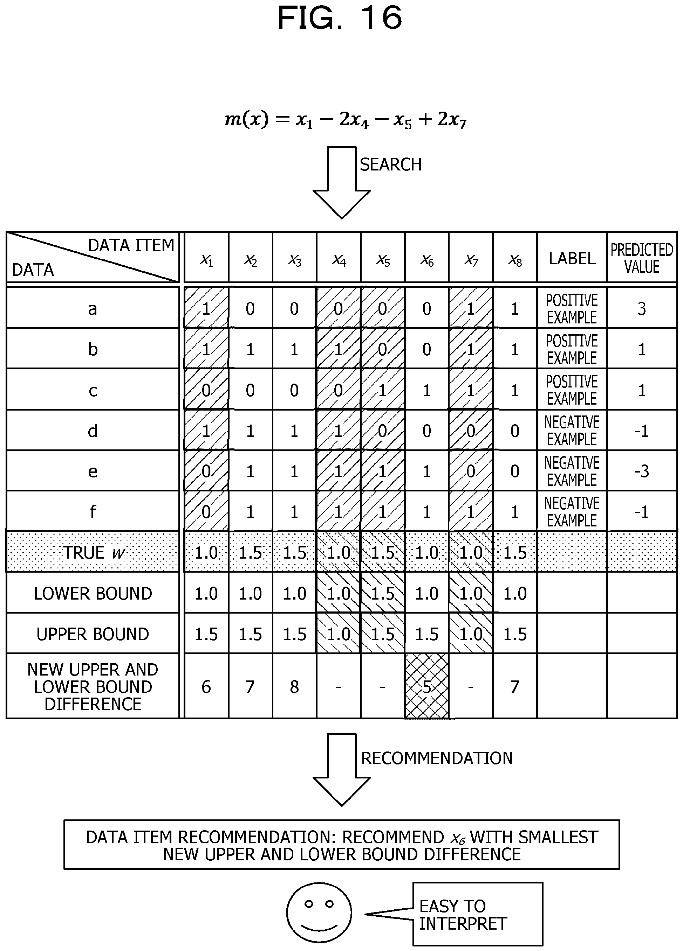

FIGs. 15 and 16 are diagrams for explaining a fourth loop of the specific example. As illustrated in FIG. 15, the interaction processing unit 22 fixes, to "1.0", the lower bound and the upper bound of the data item "$x_7$" evaluated as "easy to interpret" in the first loop and the data item "$x_4$" evaluated as "easy to interpret" in the second loop, and fixes, to "1.5", the lower bound and the upper bound of the data item "$x_5$" evaluated as "difficult to interpret" in the third loop.

Then, at the time of inputting the training data set 14 to the loss function L of the equation (3) and calculating the optimum solution of the loss function using a method similar to that described with reference to FIG. 5, the interaction processing unit 22 sets "$w_7 = 1.0$" corresponding to the data item "$x_7$", "$w_4 = 1.0$" corresponding to the data item "$x_4$", and "$w_5 = 1.5$" corresponding to the data item "$x_5$", and sets random values for other pieces of "w".

That is, the interaction processing unit 22 reflects the user evaluation "easy to interpret" in the data item "$x_7$" and in the data item "$x_4$", reflects the user evaluation "difficult to interpret" in the data item "$x_5$", and sets random values for other data items as the evaluation is unknown, and then executes retraining of the classification model. Here, it is assumed that the classification model is generated as "$m(x) = x_1 - 2x_4 - x_5 + 2x_7$" by the retraining.

Subsequently, the interaction processing unit 22 generates the inquiry screen 50 in which the retrained classification model 15 "$m(x) = x_1 - 2x_4 - x_5 + 2x_7$" is displayed in the area 51, and displays it to the user. Here, since the interaction processing unit 22 obtains the user evaluation "difficult to interpret" for the classification model "$m(x) = x_1 - 2x_4 - x_5 + 2x_7$", it searches for the data item to be recommended.

Specifically, as illustrated in FIG. 16, the interaction processing unit 22 generates a new upper bound and lower bound when each of the data items other than the evaluated data items "$x_7$", "$x_4$", and "$x_5$" is inconsistent, and calculates an optimum solution for each of them, thereby calculating 10 optimum solutions (5 sets of upper bound and lower bound optimum solutions). Then, assuming that the interaction processing unit 22 has calculated the individual differences between the new upper and lower bound optimum solutions of the data items "$x_1$ to $x_8$" excluding the data items "$x_7$", "$x_4$", and "$x_5$" as "6, 7, 8, -, -, 5, -, and 7" as illustrated in FIG. 16, it determines the data item "$x_6$" with the smallest difference as the recommendation target. Then, the interaction processing unit 22 generates the inquiry screen 50 in which the data item "$x_6$" is displayed in the area 52, and displays it to the user to recommend the data item "$x_6$" to the user.

Note that, in this specific example, it is assumed that the interaction processing unit 22 has obtained the evaluation of "easy to interpret" from the user with respect to the recommended data item "$x_6$".

(Fifth Loop)

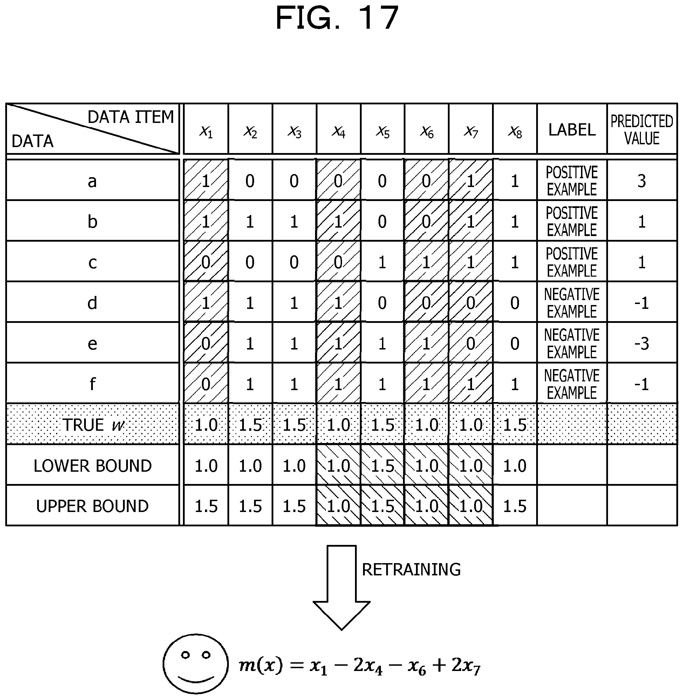

FIG. 17 is a diagram for explaining a fifth loop of the specific example. As illustrated in FIG. 17, the interaction processing unit 22 fixes, to "1.0", the lower bound and the upper bound of the data item "$x_7$" evaluated as "easy to interpret" in the first loop, the data item "$x_4$" evaluated as "easy to interpret" in the second loop, and the data item "$x_6$" evaluated as "easy to interpret" in the fourth loop, and fixes, to "1.5", the lower bound and the upper bound of the data item "$x_5$" evaluated as "difficult to interpret" in the third loop.

Then, at the time of inputting the training data set 14 to the loss function L of the equation (3) and calculating the optimum solution of the loss function using a method similar to that described with reference to FIG. 5, the interaction processing unit 22 sets "$w_7 = 1.0$" corresponding to the data item "$x_7$", "$w_4 = 1.0$" corresponding to the data item "$x_4$", "$w_6 = 1.0$" corresponding to the data item "$x_6$", and "$w_5 = 1.5$" corresponding to the data item "$x_5$", and sets random values for other pieces of "w".

That is, the interaction processing unit 22 reflects the user evaluation "easy to interpret" in the data items "$x_7$", "$x_4$", and "$x_6$", reflects the user evaluation "difficult to interpret" in the data item "$x_5$", and sets random values for other data items as the evaluation is unknown, and then executes retraining of the classification model. Here, it is assumed that the classification model is generated as "$m(x) = x_1 - 2x_4 - x_6 + 2x_7$" by the retraining.

Subsequently, the interaction processing unit 22 generates the inquiry screen 50 in which the retrained classification model "$m(x) = x_1 - 2x_4 - x_6 + 2x_7$" is displayed in the area 51, and displays it to the user. Here, it is assumed that the interaction processing unit 22 has obtained the user evaluation "easy to interpret" with respect to the classification model "$m(x) = x_1 - 2x_4 - x_6 + 2x_7$".

Then, the interaction processing unit 22 determines that the linear model easy for the user to interpret has been generated to terminate the search and the retraining, and outputs the current classification model "$m(x) = x_1 - 2x_4 - x_6 + 2x_7$" to the storage unit 13 as the classification model 15.

[Processing Flow]

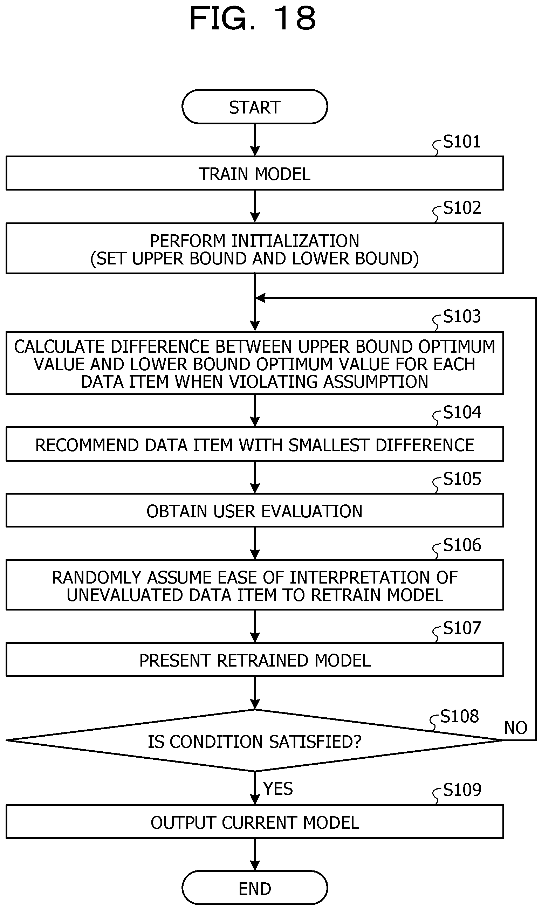

FIG. 18 is a flowchart illustrating a processing flow. As illustrated in FIG. 18, the training unit 21 executes training of the model (classification model), and stores it in the storage unit 13 (S101). Subsequently, the interaction processing unit 22 executes initialization such as setting the upper bound and the lower bound (S102).

Then, the interaction processing unit 22 calculates a difference between the optimum value of the upper bound and the optimum value of the lower bound in a case of violating the assumption for each data item of the training data set 14 (S103), and recommends the data item with the smallest difference to the user (S104).

Thereafter, the interaction processing unit 22 obtains the user evaluation for the recommended data item (S105), reflects the user evaluation on the recommended data item, and randomly assumes the ease of interpretation of unevaluated data items to retrain the model (S106).

Then, the interaction processing unit 22 presents the retrained model (S107), and if conditions of the user are satisfied (Yes in S108), it outputs the current model (S109). On the other hand, if the conditions of the user are not satisfied (No in S108), the interaction processing unit 22 repeats S103 and subsequent steps.

[Effects]

As described above, the information processing apparatus 10 is capable of imposing a simple task of "evaluating one data item" on humans to obtain the actual ease of interpretation. Furthermore, the information processing apparatus 10 is capable of generating a classification model based on optimization of the loss function while adjusting the appearance frequency of individual data items. As a result, the information processing apparatus 10 is enabled to generate a highly interpretable classification model with less burden on humans.

[Second Embodiment]

Incidentally, while the embodiment of the present invention has been described above, the present invention may be carried out in a variety of different modes in addition to the embodiment described above.

[Numerical Values, etc.]

The exemplary numerical values, the loss function, the number of data items, the number of training data, and the like used in the embodiment described above are merely examples, and may be optionally changed. Furthermore, the loss function used to generate the classification model is not limited to the one expressed by the equation (3), and another objective function including a weight penalty that changes depending on whether it is "easy to interpret" or "difficult to interpret" may be adopted. Furthermore, the processing flow may also be appropriately changed within a range with no inconsistencies. Furthermore, the device that executes the training unit 21 and the device that executes the interaction processing unit 22 and the output unit 26 may be implemented by separate devices.

[Models, etc.]

While the example of reflecting the user evaluation in the model once trained and performing retraining has been described in the embodiment above, it is not limited to this, and it is also possible to reflect the user evaluation in the model before training by the method according to the embodiment described above and perform the training. Furthermore, the timing for terminating the generation (retraining) of the linear model is not limited to the user evaluation, and may be optionally set such as when execution is carried out a predetermined number of times. Furthermore, while the example of using the loss function as an exemplary objective function has been described in the embodiment above, it is not limited to this, and another objective function, such as a cost function, may be adopted.

[System]

Pieces of information including a processing procedure, a control procedure, a specific name, various types of data, and parameters described above or illustrated in the drawings may be optionally changed unless otherwise specified. Note that the training unit 21 is an exemplary acquisition unit, the recommendation unit 23 is an exemplary calculation unit and selection unit, and the retraining unit 24 is an exemplary generation unit.

Furthermore, each component of each device illustrated in the drawings is functionally conceptual, and is not necessarily physically configured as illustrated in the drawings. In other words, specific forms of distribution and integration of individual devices are not limited to those illustrated in the drawings. That is, all or a part thereof may be configured by being functionally or physically distributed or integrated in optional units depending on various types of loads, usage situations, or the like.

Moreover, all or an optional part of individual processing functions performed in each device may be implemented by a central processing unit (CPU) and a program analyzed and executed by the CPU, or may be implemented as hardware by wired logic.

[Hardware]

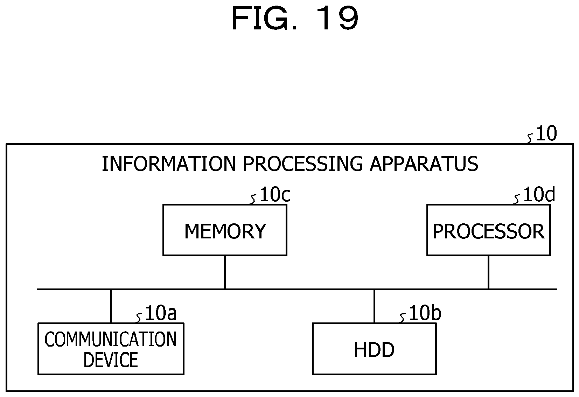

Next, an exemplary hardware configuration of the information processing apparatus 10 will be described. FIG. 19 is a diagram for explaining the exemplary hardware configuration. As illustrated in FIG. 19, the information processing apparatus 10 includes a communication device 10a, a hard disk drive (HDD) 10b, a memory 10c, and a processor 10d. Furthermore, the individual units illustrated in FIG. 19 are mutually connected by a bus or the like.

The communication device 10a is a network interface card or the like, and communicates with another server. The HDD 10b stores programs and DBs for operating the functions illustrated in FIG. 3.

The processor 10d reads, from the HDD 10b or the like, a program that executes processing similar to that of each processing unit illustrated in FIG. 3, and loads it in the memory 10c, thereby operating a process for executing each function described with reference to FIG. 3 or the like. For example, the process implements a function similar to that of each processing unit included in the information processing apparatus 10. Specifically, the processor 10d reads, from the HDD 10b or the like, a program having a function similar to that of the training unit 21, the interaction processing unit 22, the output unit 26, or the like. Then, the processor 10d executes a process for performing processing similar to that of the training unit 21, the interaction processing unit 22, the output unit 26, or the like.

In this manner, the information processing apparatus 10 reads and executes a program to operate as an information processing apparatus that executes a model generation method. Furthermore, the information processing apparatus 10 may implement functions similar to those of the embodiments described above by reading the program described above from a recording medium with a medium reading device and executing the read program described above. Note that other programs referred to in the embodiments are not limited to being executed by the information processing apparatus 10. For example, the present invention may be similarly applied to a case where another computer or server executes a program, or a case where such computer and server cooperatively execute a program.

**Claims**

1. A model generation program for causing a computer to execute a process comprising:

    obtaining a training data set to be used to generate a linear model;
    calculating, on a first assumption that assumes each of individual data items included in the training data set is easy for a user to interpret, each of first values obtained by optimizing an objective function that has ease of interpretation of the data item as a loss weight using the training data set for each first state in which the data item violates the first assumption, and calculating, on a second assumption that assumes the data item is difficult for the user to interpret, each of second values obtained by optimizing the objective function using the training data set for each second state in which the data item violates the second assumption;
    selecting a specific data item from the individual data items on a basis of each of the first values and each of the second values for each of the individual data items; and
    generating the linear model using user evaluation for the specific data item.

2. The model generation program according to claim 1, wherein
    the selecting calculates, for each of the individual data items, a difference between the first value when the data item is in the first state and the second value when the data item is in the second state, and selects the data item with the smallest difference as the specific data item.

3. The model generation program according to claim 2, wherein
    the generating obtains an evaluation result in which the user evaluates the specific data item as easy to interpret or difficult to interpret, determines the loss weight for the specific data item on a basis of the evaluation result, determines the loss weight for another data item other than the specific data item to be either the first assumption or the second assumption, and generates the linear model based on a regression equation obtained by optimizing the objective function in which each of the determined loss weights is set.

4. The model generation program according to claim 3, wherein

    the calculating calculates each of the first values and each of the second values for each of the data items for which the user evaluation is unevaluated in a state where the loss weight for the data item for which the user evaluation is obtained is determined until the linear model that satisfies a predetermined condition is generated, the selecting selects the specific data item, and
    the generating generates the linear model based on the regression equation obtained by optimizing the objective function in which the individual loss weights for the individual data items are set on a basis of an evaluation status of each of the data items.

5. The model generation program according to claim 4, wherein

    the obtaining obtains a trained linear model trained using the training data set and the objective function in which the individual loss weights for the individual data items are randomly set, and
    the generating executes retraining of the linear model using the objective function in which the individual loss weights for the individual data items are set on the basis of the evaluation status of each of the data items for the trained linear model.

6. A model generation method for causing a computer to execute a process comprising:

    obtaining a training data set to be used to generate a linear model;
    calculating, on a first assumption that assumes each of individual data items included in the training data set is easy for a user to interpret, each of first values obtained by optimizing an objective function that has ease of interpretation of the data item as a loss weight using the training data set for each first state in which the data item violates the first assumption, and calculating, on a second assumption that assumes the data item is difficult for the user to interpret, each of second values obtained by optimizing the objective function using the training data set for each second state in which the data item violates the second assumption;
    selecting a specific data item from the individual data items on a basis of each of the first values and each of the second values for each of the individual data items; and
    generating the linear model using user evaluation for the specific data item.

7.  An information processing apparatus comprising:

an obtainment unit that obtains a training data set to be used to generate a linear model;
a calculation unit that:

calculates, on a first assumption that assumes each of individual data items included in the training data set is easy for a user to interpret, each of first values obtained by optimizing an objective function that has ease of interpretation of the data item as a loss weight using the training data set for each first state in which the data item violates the first assumption, and
calculates, on a second assumption that assumes the data item is difficult for the user to interpret, each of second values obtained by optimizing the objective function using the training data set for each second state in which the data item violates the second assumption;

a selection unit that selects a specific data item from the individual data items on a basis of each of the first values and each of the second values for each of the individual data items; and
a generation unit that generates the linear model using user evaluation for the specific data item.

# FIG. 1

INFORMATION PROCESSING APPARATUS

TRAINED LINEAR MODEL

SEARCH FOR DATA ITEM TO BE RECOMMENDED BY LOSS FUNCTION OPTIMIZATION

RECOMMEND DATA ITEM TO USER

PRESENT MODEL TO USER

RETRAIN LINEAR MODEL

EP 4 116 891 A1

# FIG. 2

| DATA ITEM / DATA | $x_1$ | $x_2$ | $x_3$ | $x_4$ | $x_5$ | $x_6$ | $x_7$ | $x_8$ | LABEL |
|---|---|---|---|---|---|---|---|---|---|
| a | 1 | 0 | 0 | 0 | 0 | 0 | 1 | 1 | POSITIVE EXAMPLE |
| b | 1 | 1 | 1 | 1 | 0 | 0 | 1 | 1 | POSITIVE EXAMPLE |
| c | 0 | 0 | 0 | 0 | 1 | 1 | 1 | 1 | POSITIVE EXAMPLE |
| d | 1 | 1 | 1 | 1 | 0 | 0 | 0 | 0 | NEGATIVE EXAMPLE |
| e | 0 | 1 | 1 | 1 | 1 | 1 | 0 | 0 | NEGATIVE EXAMPLE |
| f | 0 | 1 | 1 | 1 | 1 | 1 | 1 | 1 | NEGATIVE EXAMPLE |
| EASE OF INTERPRETATION | △ | × | × | ○ | × | △ | ○ | × | |

$$m(x) = x_1 - x_2 - x_4 - x_5 + x_7 + x_8$$

REGRESSION EQUATION IS LONG AND TASK REQUIRES LONG TIME

$$m(x) = x_1 - 2x_2 - x_5 + 2x_8$$

REGRESSION EQUATION IS SHORT BUT THERE ARE MANY HARDLY INTERPRETABLE DATA ITEMS

# FIG. 3

```
                                                        ⌐10
┌──────────────────────────────────────────────────────────┐
│              INFORMATION PROCESSING APPARATUS             │
│         ⌐11                          ⌐12                   │
│  ┌──────────────────┐        ┌──────────────────┐         │
│  │  COMMUNICATION   │        │   DISPLAY UNIT   │         │
│  │      UNIT        │        │                  │         │
│  └──────────────────┘        └──────────────────┘         │
│                                        ⌐20                 │
│  ┌────────────────────────────────────────────────────┐   │
│  │                  CONTROL UNIT                      │   │
│  │        ⌐21                                         │   │
│  │  ┌──────────────────┐                              │   │
│  │  │  TRAINING UNIT   │                              │   │
│  │  └──────────────────┘                  ⌐22         │   │
│  │  ┌──────────────────────────────────────────────┐  │   │
│  │  │  INTERACTION                                 │  │   │
│  │  │  PROCESSING UNIT                             │  │   │
│  │  │       ⌐23                      ⌐24           │  │   │
│  │  │  ┌────────────────┐    ┌────────────────┐    │  │   │
│  │  │  │ RECOMMENDATION │    │   RETRAINING   │    │  │   │
│  │  │  │     UNIT       │    │     UNIT       │    │  │   │
│  │  │  └────────────────┘    └────────────────┘    │  │   │
│  │  │       ⌐25                                    │  │   │
│  │  │  ┌────────────────┐    ┌────────────────┐    │  │   │
│  │  │  │     SCREEN     │    │  OUTPUT UNIT   │    │  │   │
│  │  │  │  DISPLAY UNIT  │    │                │    │  │   │
│  │  │  └────────────────┘    └────────────────┘    │  │   │
│  │  └──────────────────────────────────┐ 26 ──────┘  │   │
│  └────────────────────────────────────────────────────┘   │
│                                        ⌐13                 │
│  ┌────────────────────────────────────────────────────┐   │
│  │                  STORAGE UNIT                      │   │
│  │       ⌐14                      ⌐15                 │   │
│  │  ┌────────────────┐    ┌────────────────┐          │   │
│  │  │ TRAINING DATA  │    │ CLASSIFICATION │          │   │
│  │  │     SET        │    │    MODEL       │          │   │
│  │  └────────────────┘    └────────────────┘          │   │
│  └────────────────────────────────────────────────────┘   │
└──────────────────────────────────────────────────────────┘
```

# FIG. 4

| DATA \ DATA ITEM | $x_1$ | $x_2$ | $x_3$ | $x_4$ | $x_5$ | $x_6$ | $x_7$ | $x_8$ | LABEL |
|---|---|---|---|---|---|---|---|---|---|
| a | 1 | 0 | 0 | 0 | 0 | 0 | 1 | 1 | POSITIVE EXAMPLE |
| b | 1 | 1 | 1 | 1 | 0 | 0 | 1 | 1 | POSITIVE EXAMPLE |
| c | 0 | 0 | 0 | 0 | 1 | 1 | 1 | 1 | POSITIVE EXAMPLE |
| d | 1 | 1 | 1 | 1 | 0 | 0 | 0 | 0 | NEGATIVE EXAMPLE |
| e | 0 | 1 | 1 | 1 | 1 | 1 | 0 | 0 | NEGATIVE EXAMPLE |
| f | 0 | 1 | 1 | 1 | 1 | 1 | 1 | 1 | NEGATIVE EXAMPLE |

# FIG. 5

$$L(\beta \mid w) = \|y - X\beta\|_2^2 + \rho \sum_i w_i |\beta_i|$$

$$
X \equiv
\begin{bmatrix}
\text{DATA a} \\
\text{DATA b} \\
\text{DATA c} \\
\text{DATA d} \\
\text{DATA e} \\
\text{DATA f}
\end{bmatrix}
\equiv
\begin{bmatrix}
x_1 & x_2 & x_3 & x_4 & x_5 & x_6 & x_7 & x_8 \\
x_1 & x_2 & x_3 & x_4 & x_5 & x_6 & x_7 & x_8 \\
x_1 & x_2 & x_3 & x_4 & x_5 & x_6 & x_7 & x_8 \\
x_1 & x_2 & x_3 & x_4 & x_5 & x_6 & x_7 & x_8 \\
x_1 & x_2 & x_3 & x_4 & x_5 & x_6 & x_7 & x_8 \\
x_1 & x_2 & x_3 & x_4 & x_5 & x_6 & x_7 & x_8
\end{bmatrix}
\equiv
\begin{bmatrix}
1 & 0 & 0 & 0 & 0 & 0 & 1 & 1 \\
1 & 1 & 1 & 1 & 0 & 0 & 1 & 1 \\
0 & 0 & 0 & 0 & 1 & 1 & 1 & 1 \\
1 & 1 & 1 & 1 & 0 & 0 & 0 & 0 \\
0 & 1 & 1 & 1 & 1 & 1 & 0 & 0 \\
0 & 1 & 1 & 1 & 1 & 1 & 1 & 1
\end{bmatrix}
$$

$$
y \equiv
\begin{bmatrix}
\text{DATA a} \\
\text{DATA b} \\
\text{DATA c} \\
\text{DATA d} \\
\text{DATA e} \\
\text{DATA f}
\end{bmatrix}
\equiv
\begin{bmatrix}
\text{LABEL} \\
\text{LABEL} \\
\text{LABEL} \\
\text{LABEL} \\
\text{LABEL} \\
\text{LABEL}
\end{bmatrix}
\equiv
\begin{bmatrix}
\text{POSITIVE EXAMPLE} \\
\text{POSITIVE EXAMPLE} \\
\text{POSITIVE EXAMPLE} \\
\text{NEGATIVE EXAMPLE} \\
\text{NEGATIVE EXAMPLE} \\
\text{NEGATIVE EXAMPLE}
\end{bmatrix}
\equiv
\begin{bmatrix}
1 \\
1 \\
1 \\
0 \\
0 \\
0
\end{bmatrix}
$$

# FIG. 6

$$m(x) = x_1 - 2x_2 - x_5 + 2x_8$$

| DATA ITEM / DATA | $x_1$ | $x_2$ | $x_3$ | $x_4$ | $x_5$ | $x_6$ | $x_7$ | $x_8$ | LABEL | PREDICTED VALUE |
|---|---|---|---|---|---|---|---|---|---|---|
| a | 1 | 0 | 0 | 0 | 0 | 0 | 1 | 1 | POSITIVE EXAMPLE | 3 |
| b | 1 | 1 | 1 | 1 | 0 | 0 | 1 | 1 | POSITIVE EXAMPLE | 1 |
| c | 0 | 0 | 0 | 0 | 1 | 1 | 1 | 1 | POSITIVE EXAMPLE | 1 |
| d | 1 | 1 | 1 | 1 | 0 | 0 | 0 | 0 | NEGATIVE EXAMPLE | -1 |
| e | 0 | 1 | 1 | 1 | 1 | 1 | 0 | 0 | NEGATIVE EXAMPLE | -3 |
| f | 0 | 1 | 1 | 1 | 1 | 1 | 1 | 1 | NEGATIVE EXAMPLE | -1 |
| LOWER BOUND | 1.0 | 1.0 | 1.0 | 1.0 | 1.0 | 1.0 | 1.0 | 1.0 | | |
| UPPER BOUND | 1.5 | 1.5 | 1.5 | 1.5 | 1.5 | 1.5 | 1.5 | 1.5 | | |

# FIG. 7

ASSUME THERE ARE LARGE NUMBER OF
ITEMS DIFFICULT TO INTERPRET

CURRENT UPPER
BOUND

UPPER BOUND
AND LOWER
BOUND WHEN
DATA ITEM $x_1$
VIOLATES
ASSUMPTION

UPPER BOUND
AND LOWER
BOUND WHEN
DATA ITEM $x_2$
VIOLATES
ASSUMPTION

UPPER BOUND
AND LOWER
BOUND WHEN
DATA ITEM $x_3$
VIOLATES
ASSUMPTION

...

RECOMMEND DATA ITEM $x_3$
BECAUSE OF SMALLEST
DIFFERENCE BETWEEN UPPER
BOUND AND LOWER BOUND

CURRENT LOWER
BOUND

ASSUME THERE ARE LARGE NUMBER OF
ITEMS EASY TO INTERPRET

EP 4 116 891 A1

# FIG. 8

$$m(x) = x_1 - 2x_2 - x_5 + 2x_8$$

SEARCH

| DATA \ DATA ITEM | $x_1$ | $x_2$ | $x_3$ | $x_4$ | $x_5$ | $x_6$ | $x_7$ | $x_8$ | LABEL | PREDICTED VALUE |
|---|---|---|---|---|---|---|---|---|---|---|
| a | 1 | 0 | 0 | 0 | 0 | 0 | 1 | 1 | POSITIVE EXAMPLE | 3 |
| b | 1 | 1 | 1 | 1 | 0 | 0 | 1 | 1 | POSITIVE EXAMPLE | 1 |
| c | 0 | 0 | 0 | 0 | 1 | 1 | 1 | 1 | POSITIVE EXAMPLE | 1 |
| d | 1 | 1 | 1 | 1 | 0 | 0 | 0 | 0 | NEGATIVE EXAMPLE | -1 |
| e | 0 | 1 | 1 | 1 | 1 | 1 | 0 | 0 | NEGATIVE EXAMPLE | -3 |
| f | 0 | 1 | 1 | 1 | 1 | 1 | 1 | 1 | NEGATIVE EXAMPLE | -1 |
| TRUE $w$ | 1.0 | 1.5 | 1.5 | 1.0 | 1.5 | 1.0 | 1.0 | 1.5 | | |
| LOWER BOUND | 1.0 | 1.0 | 1.0 | 1.0 | 1.0 | 1.0 | 1.0 | 1.0 | | |
| UPPER BOUND | 1.5 | 1.5 | 1.5 | 1.5 | 1.5 | 1.5 | 1.5 | 1.5 | | |
| NEW UPPER AND LOWER BOUND DIFFERENCE | 10 | 8 | 11 | 9 | 10 | 8 | 7 | 10 | | |

# FIG. 9

| | $x_1$ | $x_2$ | $x_3$ | $x_4$ | $x_5$ | $x_6$ | $x_7$ | $x_8$ |
|---|---|---|---|---|---|---|---|---|
| NEW ASSUMPTION LOWER BOUND $w$ | 1.0 | <u>1.5</u> | 1.0 | 1.0 | 1.0 | 1.0 | 1.0 | 1.0 |
| NEW ASSUMPTION UPPER BOUND $w$ | 1.5 | <u>1.0</u> | 1.5 | 1.5 | 1.5 | 1.5 | 1.5 | 1.5 |

CREATE THESE TO OPTIMIZE $L(\beta w)$ WITH EACH OF THEM, AND USE DIFFERENCE AS NEW UPPER AND LOWER BOUND DIFFERENCE

# FIG. 10

51      52   50

**INTERACTIVE MODEL CREATION SYSTEM**

**CURRENT MODEL**

$$x_1 - 2x_2 - x_5 + 2x_8$$

OUTPUT MODEL

**DATA ITEM EVALUATION**

[ITEM 7] ☑EASY TO INTERPRET
    ☐DIFFICULT TO INTERPRET

TRANSMIT
EVALUATION RESULT

**DATA DETAIL**

|  | $x_1$ | $x_2$ | $x_3$ | $x_4$ | $x_5$ | $x_6$ | $x_7$ | $x_8$ | LABEL | PREDICTED VALUE |
|---|---|---|---|---|---|---|---|---|---|---|
| a | 1 | 0 | 0 | 0 | 0 | 0 | 1 | 1 | POSITIVE EXAMPLE | 3 |
| b | 1 | 1 | 1 | 1 | 0 | 0 | 1 | 1 | POSITIVE EXAMPLE | 1 |
| c | 0 | 0 | 0 | 0 | 1 | 1 | 1 | 1 | POSITIVE EXAMPLE | 1 |
| ... | ... | ... | ... | ... | ... | ... | ... | ... | ... | ... |

53

# FIG. 11

| DATA ITEM / DATA | $x_1$ | $x_2$ | $x_3$ | $x_4$ | $x_5$ | $x_6$ | $x_7$ | $x_8$ | LABEL | PREDICTED VALUE |
|---|---|---|---|---|---|---|---|---|---|---|
| a | 1 | 0 | 0 | 0 | 0 | 0 | 1 | 1 | POSITIVE EXAMPLE | 3 |
| b | 1 | 1 | 1 | 1 | 0 | 0 | 1 | 1 | POSITIVE EXAMPLE | 1 |
| c | 0 | 0 | 0 | 0 | 1 | 1 | 1 | 1 | POSITIVE EXAMPLE | 1 |
| d | 1 | 1 | 1 | 1 | 0 | 0 | 0 | 0 | NEGATIVE EXAMPLE | -1 |
| e | 0 | 1 | 1 | 1 | 1 | 1 | 0 | 0 | NEGATIVE EXAMPLE | -3 |
| f | 0 | 1 | 1 | 1 | 1 | 1 | 1 | 1 | NEGATIVE EXAMPLE | -1 |
| TRUE $w$ | 1.0 | 1.5 | 1.5 | 1.0 | 1.5 | 1.0 | 1.0 | 1.5 | | |
| LOWER BOUND | 1.0 | 1.0 | 1.0 | 1.0 | 1.0 | 1.0 | 1.0 | 1.0 | | |
| UPPER BOUND | 1.5 | 1.5 | 1.5 | 1.5 | 1.5 | 1.5 | 1.0 | 1.5 | | |

RETRAINING

$$m(x) = x_1 - 2x_2 - x_5 + 2x_7$$

# FIG. 12

$$m(x) = x_1 - 2x_2 - x_5 + 2x_7$$

SEARCH

| DATA \ DATA ITEM | $x_1$ | $x_2$ | $x_3$ | $x_4$ | $x_5$ | $x_6$ | $x_7$ | $x_8$ | LABEL | PREDICTED VALUE |
|---|---|---|---|---|---|---|---|---|---|---|
| a | 1 | 0 | 0 | 0 | 0 | 0 | 1 | 1 | POSITIVE EXAMPLE | 3 |
| b | 1 | 1 | 1 | 1 | 0 | 0 | 1 | 1 | POSITIVE EXAMPLE | 1 |
| c | 0 | 0 | 0 | 0 | 1 | 1 | 1 | 1 | POSITIVE EXAMPLE | 1 |
| d | 1 | 1 | 1 | 1 | 0 | 0 | 0 | 0 | NEGATIVE EXAMPLE | -1 |
| e | 0 | 1 | 1 | 1 | 1 | 1 | 0 | 0 | NEGATIVE EXAMPLE | -3 |
| f | 0 | 1 | 1 | 1 | 1 | 1 | 1 | 1 | NEGATIVE EXAMPLE | -1 |
| TRUE $w$ | 1.0 | 1.5 | 1.5 | 1.0 | 1.5 | 1.0 | 1.0 | 1.5 | | |
| LOWER BOUND | 1.0 | 1.0 | 1.0 | 1.0 | 1.0 | 1.0 | 1.0 | 1.0 | | |
| UPPER BOUND | 1.5 | 1.5 | 1.5 | 1.5 | 1.5 | 1.5 | 1.0 | 1.5 | | |
| NEW UPPER AND LOWER BOUND DIFFERENCE | 9 | 8 | 10 | 6 | 10 | 8 | - | 10 | | |

RECOMMENDATION

DATA ITEM RECOMMENDATION: RECOMMEND $x_4$ WITH SMALLEST NEW UPPER AND LOWER BOUND DIFFERENCE

EASY TO INTERPRET

# FIG. 13

| DATA \ DATA ITEM | $x_1$ | $x_2$ | $x_3$ | $x_4$ | $x_5$ | $x_6$ | $x_7$ | $x_8$ | LABEL | PREDICTED VALUE |
|---|---|---|---|---|---|---|---|---|---|---|
| a | 1 | 0 | 0 | 0 | 0 | 0 | 1 | 1 | POSITIVE EXAMPLE | 3 |
| b | 1 | 1 | 1 | 1 | 0 | 0 | 1 | 1 | POSITIVE EXAMPLE | 1 |
| c | 0 | 0 | 0 | 0 | 1 | 1 | 1 | 1 | POSITIVE EXAMPLE | 1 |
| d | 1 | 1 | 1 | 1 | 0 | 0 | 0 | 0 | NEGATIVE EXAMPLE | -1 |
| e | 0 | 1 | 1 | 1 | 1 | 1 | 0 | 0 | NEGATIVE EXAMPLE | -3 |
| f | 0 | 1 | 1 | 1 | 1 | 1 | 1 | 1 | NEGATIVE EXAMPLE | -1 |
| TRUE $w$ | 1.0 | 1.5 | 1.5 | 1.0 | 1.5 | 1.0 | 1.0 | 1.5 | | |
| LOWER BOUND | 1.0 | 1.0 | 1.0 | 1.0 | 1.0 | 1.0 | 1.0 | 1.0 | | |
| UPPER BOUND | 1.5 | 1.5 | 1.5 | 1.0 | 1.5 | 1.5 | 1.0 | 1.5 | | |

RETRAINING

$$m(x) = x_1 - 2x_4 - x_5 + 2x_7$$

# FIG. 14

$$m(x) = x_1 - 2x_4 - x_5 + 2x_7$$

⬇ SEARCH

| DATA \ DATA ITEM | $x_1$ | $x_2$ | $x_3$ | $x_4$ | $x_5$ | $x_6$ | $x_7$ | $x_8$ | LABEL | PREDICTED VALUE |
|---|---|---|---|---|---|---|---|---|---|---|
| a | 1 | 0 | 0 | 0 | 0 | 0 | 1 | 1 | POSITIVE EXAMPLE | 3 |
| b | 1 | 1 | 1 | 1 | 0 | 0 | 1 | 1 | POSITIVE EXAMPLE | 1 |
| c | 0 | 0 | 0 | 0 | 1 | 1 | 1 | 1 | POSITIVE EXAMPLE | 1 |
| d | 1 | 1 | 1 | 1 | 0 | 0 | 0 | 0 | NEGATIVE EXAMPLE | -1 |
| e | 0 | 1 | 1 | 1 | 1 | 1 | 0 | 0 | NEGATIVE EXAMPLE | -3 |
| f | 0 | 1 | 1 | 1 | 1 | 1 | 1 | 1 | NEGATIVE EXAMPLE | -1 |
| TRUE $w$ | 1.0 | 1.5 | 1.5 | 1.0 | 1.5 | 1.0 | 1.0 | 1.5 | | |
| LOWER BOUND | 1.0 | 1.0 | 1.0 | 1.0 | 1.0 | 1.0 | 1.0 | 1.0 | | |
| UPPER BOUND | 1.5 | 1.5 | 1.5 | 1.0 | 1.5 | 1.5 | 1.0 | 1.5 | | |
| NEW UPPER AND LOWER BOUND DIFFERENCE | 9 | 8 | 9 | - | 6 | 8 | - | 8 | | |

⬇ RECOMMENDATION

DATA ITEM RECOMMENDATION: RECOMMEND $x_5$ WITH SMALLEST NEW UPPER AND LOWER BOUND DIFFERENCE

☹ DIFFICULT TO INTERPRET

# FIG. 15

| DATA \ DATA ITEM | $x_1$ | $x_2$ | $x_3$ | $x_4$ | $x_5$ | $x_6$ | $x_7$ | $x_8$ | LABEL | PREDICTED VALUE |
|---|---|---|---|---|---|---|---|---|---|---|
| a | 1 | 0 | 0 | 0 | 0 | 0 | 1 | 1 | POSITIVE EXAMPLE | 3 |
| b | 1 | 1 | 1 | 1 | 0 | 0 | 1 | 1 | POSITIVE EXAMPLE | 1 |
| c | 0 | 0 | 0 | 0 | 1 | 1 | 1 | 1 | POSITIVE EXAMPLE | 1 |
| d | 1 | 1 | 1 | 1 | 0 | 0 | 0 | 0 | NEGATIVE EXAMPLE | -1 |
| e | 0 | 1 | 1 | 1 | 1 | 1 | 0 | 0 | NEGATIVE EXAMPLE | -3 |
| f | 0 | 1 | 1 | 1 | 1 | 1 | 1 | 1 | NEGATIVE EXAMPLE | -1 |
| TRUE $w$ | 1.0 | 1.5 | 1.5 | 1.0 | 1.5 | 1.0 | 1.0 | 1.5 | | |
| LOWER BOUND | 1.0 | 1.0 | 1.0 | 1.0 | 1.5 | 1.0 | 1.0 | 1.0 | | |
| UPPER BOUND | 1.5 | 1.5 | 1.5 | 1.0 | 1.5 | 1.5 | 1.0 | 1.5 | | |

RETRAINING

$$m(x) = x_1 - 2x_4 - x_5 + 2x_7$$

# FIG. 16

$$m(x) = x_1 - 2x_4 - x_5 + 2x_7$$

SEARCH ↓

| DATA \ DATA ITEM | $x_1$ | $x_2$ | $x_3$ | $x_4$ | $x_5$ | $x_6$ | $x_7$ | $x_8$ | LABEL | PREDICTED VALUE |
|---|---|---|---|---|---|---|---|---|---|---|
| a | 1 | 0 | 0 | 0 | 0 | 0 | 1 | 1 | POSITIVE EXAMPLE | 3 |
| b | 1 | 1 | 1 | 1 | 0 | 0 | 1 | 1 | POSITIVE EXAMPLE | 1 |
| c | 0 | 0 | 0 | 0 | 1 | 1 | 1 | 1 | POSITIVE EXAMPLE | 1 |
| d | 1 | 1 | 1 | 1 | 0 | 0 | 0 | 0 | NEGATIVE EXAMPLE | -1 |
| e | 0 | 1 | 1 | 1 | 1 | 1 | 0 | 0 | NEGATIVE EXAMPLE | -3 |
| f | 0 | 1 | 1 | 1 | 1 | 1 | 1 | 1 | NEGATIVE EXAMPLE | -1 |
| TRUE $w$ | 1.0 | 1.5 | 1.5 | 1.0 | 1.5 | 1.0 | 1.0 | 1.5 | | |
| LOWER BOUND | 1.0 | 1.0 | 1.0 | 1.0 | 1.5 | 1.0 | 1.0 | 1.0 | | |
| UPPER BOUND | 1.5 | 1.5 | 1.5 | 1.0 | 1.5 | 1.5 | 1.0 | 1.5 | | |
| NEW UPPER AND LOWER BOUND DIFFERENCE | 6 | 7 | 8 | - | - | 5 | - | 7 | | |

RECOMMENDATION ↓

DATA ITEM RECOMMENDATION: RECOMMEND $x_6$ WITH SMALLEST NEW UPPER AND LOWER BOUND DIFFERENCE

EASY TO INTERPRET

# FIG. 17

| DATA ITEM / DATA | $x_1$ | $x_2$ | $x_3$ | $x_4$ | $x_5$ | $x_6$ | $x_7$ | $x_8$ | LABEL | PREDICTED VALUE |
|---|---|---|---|---|---|---|---|---|---|---|
| a | 1 | 0 | 0 | 0 | 0 | 0 | 1 | 1 | POSITIVE EXAMPLE | 3 |
| b | 1 | 1 | 1 | 1 | 0 | 0 | 1 | 1 | POSITIVE EXAMPLE | 1 |
| c | 0 | 0 | 0 | 0 | 1 | 1 | 1 | 1 | POSITIVE EXAMPLE | 1 |
| d | 1 | 1 | 1 | 1 | 0 | 0 | 0 | 0 | NEGATIVE EXAMPLE | -1 |
| e | 0 | 1 | 1 | 1 | 1 | 1 | 0 | 0 | NEGATIVE EXAMPLE | -3 |
| f | 0 | 1 | 1 | 1 | 1 | 1 | 1 | 1 | NEGATIVE EXAMPLE | -1 |
| TRUE $w$ | 1.0 | 1.5 | 1.5 | 1.0 | 1.5 | 1.0 | 1.0 | 1.5 | | |
| LOWER BOUND | 1.0 | 1.0 | 1.0 | 1.0 | 1.5 | 1.0 | 1.0 | 1.0 | | |
| UPPER BOUND | 1.5 | 1.5 | 1.5 | 1.0 | 1.5 | 1.0 | 1.0 | 1.5 | | |

RETRAINING

$$m(x) = x_1 - 2x_4 - x_6 + 2x_7$$

# FIG. 18

START

TRAIN MODEL — S101

PERFORM INITIALIZATION
(SET UPPER BOUND AND LOWER BOUND) — S102

CALCULATE DIFFERENCE BETWEEN UPPER BOUND OPTIMUM
VALUE AND LOWER BOUND OPTIMUM VALUE FOR EACH
DATA ITEM WHEN VIOLATING ASSUMPTION — S103

RECOMMEND DATA ITEM WITH SMALLEST DIFFERENCE — S104

OBTAIN USER EVALUATION — S105

RANDOMLY ASSUME EASE OF INTERPRETATION OF
UNEVALUATED DATA ITEM TO RETRAIN MODEL — S106

PRESENT RETRAINED MODEL — S107

IS CONDITION SATISFIED? — S108   NO

YES — S109

OUTPUT CURRENT MODEL

END

FIG. 19

INFORMATION PROCESSING APPARATUS ⌇10

MEMORY ⌇10c

PROCESSOR ⌇10d

COMMUNICATION DEVICE ⌇10a

HDD ⌇10b

## INTERNATIONAL SEARCH REPORT

| International application No. |
|---|
| PCT/JP2020/009534 |

**A. CLASSIFICATION OF SUBJECT MATTER**
Int. Cl. G06N20/00(2019.01)i
FI: G06N20/00

According to International Patent Classification (IPC) or to both national classification and IPC

**B. FIELDS SEARCHED**

Minimum documentation searched (classification system followed by classification symbols)
Int. Cl. G06N3/00-99/00

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | 鈴木浩史ほか．ユーザーの納得感を考慮した線形モデルの重み付き Lasso による定式化と一解法．第 112 回人工知能基本問題研究会資料．01 March 2020, pp. 67-72, in particular, pp. 68-70, (SUZUKI, Hirofumi et al. Heuristic Algorithm for Human Acceptable Linear Model based on Weighted Lasso. SIG-FPAI-112.) | 1-7 |
| A | 豊暉原侑心ほか．L1 罰則付き線形回帰の MDL による推定誤差上界について．電子情報通信学会技術研究報告．23 February 2015, vol. 114, no. 472, pp. 199-204, ISSN: 0913-5685, in particular, pp. 201-202, (TOYOKIHARA, Yushin et al. On Upper Bounds on Estimation Error of Least Squares Regression with L1 Penalty. IEICE Technical Report.) | 1-7 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26.06.2020 | 07.07.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ISAAC LAGE et al.** Human-in-the-Loop Interpretability Prior. *32nd Conference on Neural Information Processing Systems (NIPS 2018),* 2018, 10180-10189